# EUROPÄISCHE PATENTSCHRIFT

(11) **EP 2 548 088 B1**
(45) Veröffentlichungstag und Bekanntmachung des Hinweises auf die Patenterteilung: **06.05.2020**
(21) Anmeldenummer: 11709002.7
(22) Anmeldetag: 04.03.2011
(51) Int. Cl.: G05D 1/02, G01B 11/00, G01S 5/16

(54) **ANLAGE, VERFAHREN ZUR BESTIMMUNG DER POSITION EINES FAHRZEUGES INNERHALB EINER ANLAGE UND VERFAHREN ZUM ERSTELLEN EINER VERBESSERTEN SOLL-BAHNKURVE FÜR EIN FAHRZEUG INNERHALB EINER ANLAGE**
SYSTEM, METHOD FOR DETERMINING THE POSITION OF A VEHICLE WITHIN A SYSTEM AND METHOD FOR CREATING AN IMPROVED TARGET PATH FOR A VEHICLE WITHIN A SYSTEM
INSTALLATION ET PROCÉDÉ DE DÉTERMINATION DE LA POSITION D'UN VÉHICULE À L'INTÉRIEUR D'UNE INSTALLATION, ET PROCÉDÉ DESTINÉ À ÉTABLIR UNE TRAJECTOIRE NOMINALE AMÉLIORÉE POUR UN VÉHICULE À L'INTÉRIEUR D'UNE INSTALLATION

(30) Priorität: 19.03.2010 DE 102010012187
(43) Veröffentlichungstag der Anmeldung: 23.01.2013
(73) Patentinhaber: SEW-EURODRIVE GmbH & Co. KG, 76646 Bruchsal (DE)
(72) Erfinder: ESCURIOLA ETTINGSHAUSEN, Manuel, 65347 Eltville (DE); KÖVARI, Lars, 76351 Linkenheim-Hochstetten (DE)
(86) Internationale Anmeldenummer: PCT/EP2011/001073
(87) Internationale Veröffentlichungsnummer: WO 2011/113535

(56) Entgegenhaltungen:
- WO-A1-2008/111692
- DE-A1-102004 020 099
- US-A- 5 793 934
- US-A1- 2004 073 337
- US-A1- 2006 184 013
- US-A1- 2009 062 974
- KIM J H ET AL: "EXPERIMENTAL INVESTIGATION FOR THE ESTIMATION OF A MOBILE ROBOT'S POSITION BY LINEAR SCANNING OF A LANDMARK", ROBOTICS AND AUTONOMOUS SYSTEMS, Bd. 13, Nr. 1, 1. Juni 1994 (1994-06-01), Seiten 39-51, XP000449756, ELSEVIER SCIENCE PUBLISHERS, AMSTERDAM, NL ISSN: 0921-8890, DOI: 10.1016/0921-8890(94)90061-2
- STERGIOS I ROUMELIOTIS ET AL: "Distributed Multirobot Localization", IEEE TRANSACTIONS ON ROBOTICS AND AUTOMATION, Bd. 18, Nr. 5, 1. Oktober 2002 (2002-10-01), XP011079563, IEEE INC, NEW YORK, US ISSN: 1042-296X
- HOCK C: "Landmark navigation with ATHENE", 91 ICAR. FIFTH INTERNATIONAL CONFERENCE ON ADVANCED ROBOTICS. ROBOTS IN UNSTRUCTURED ENVIRONMENTS 19-22 JUNE 1991 PISA, ITALY, 1991, Seiten 1099-1104, XP002685474, 91 ICAR. Fifth International Conference on Advanced Robotics. Robots in Unstructured Environments (Cat. No.91TH0376-4) IEEE New York, NY, USA DOI: 10.1109/ICAR.1991.240409 ISBN: 0-7803-0078-5
- BAUMGARTNER E T ET AL: "An autonomous vision-based mobile robot", IEEE TRANSACTIONS ON AUTOMATIC CONTROL, Bd. 39, Nr. 4, 1. März 1994 (1994-03-01), Seiten 493-502, XP002968093, IEEE SERVICE CENTER, LOS ALAMITOS, CA, US ISSN: 0018-9286, DOI: 10.1109/9.280748

## Beschreibung

Die Erfindung betrifft ein Verfahren und eine Anlage zur Bestimmung der Position eines Fahrzeuges innerhalb einer Anlage.

Es ist bekannt, bei Fahrzeugen ein GPS System zur Navigation zu verwenden. Allerdings ist dies in geschlossenen Anlagen nur teilweise verwendbar. Insbesondere Reflexion von Strahlungen kann zu Fehlern bei der Positionsbestimmung führen. Außerdem ist eine aufwendige elektronische Schaltung notwendig.

Weiter ist bei Fahrzeugen zur Navigation innerhalb einer Anlage bekannt, mittels Aussendung von Laserstrahlen Markierungen zu detektieren, wobei sogar die Entfernungsbestimmung mittels Laufzeitverfahren ausführbar ist. Auch diese Verfahren sind aufwendig und kostspielig.

Aus der WO 2008/111692 A1 ist als nächstliegender Stand der Technik eine Landmarke für die Positionsbestimmung eines mobilen Roboters bekannt.

Aus der US 2006/184013 A1 ist ein Verfahren zur Bestimmung der Position eines Objektes bekannt.

Aus der Veröffentlichung XP 000449756 ist eine experimentelle Untersuchung zur Schätzung der Position eines mobilen Roboters mittels linearem Scannen einer Landmarke bekannt.

Aus der US 2009/062974 A1 ist ein autonomes mobiles Robotersystem bekannt.

Aus der US 2004/073337 A1 ist ein Sentry Robotersystem bekannt.

Der Erfindung liegt daher die Aufgabe zugrunde, eine Anlage und ein Verfahren zur Bestimmung der Position eines Fahrzeuges innerhalb einer Anlage weiterzubilden, wobei die Navigation des Fahrzeuges innerhalb der Anlage kostengünstig und in einfacher Weise weitergebildet werden soll.

Der Umfang der Erfindung ist durch die Ansprüche bestimmt.

Erfindungsgemäß wird die Aufgabe bei der Anlage nach den in Anspruch 8 und bei dem Verfahren zur Bestimmung der Position eines Fahrzeuges innerhalb einer Anlage nach den in Anspruch 1 angegebenen Merkmalen gelöst.

Wichtige Merkmale bei dem Verfahren zur Bestimmung der Position eines Fahrzeuges innerhalb einer Anlage sind, dass eine oder mehrere, auf einem Fahrzeug und/oder in der Anlage angeordnete Markierung beziehungsweise Markierungen mittels einer Kamera des Fahrzeugs detektiert werden, insbesondere ein Bild erfasst und/oder aufgenommen werden,
aus dem jeweils detektierten Bild zumindest einer Markierung die Position eines Fahrzeugs geschätzt und/oder bestimmt wird.

Von Vorteil ist dabei, dass in einfacher Weise mit einer auf dem Fahrzeug befestigten Kamera durch bloße Aufnahme eines Kamerabildes mit Bildauswertemitteln die Position des Fahrzeugs bestimmbar ist.

Bei einer vorteilhaften Ausgestaltung ist aus Größe und Verzerrung, insbesondere auch aus Form, Position und räumlicher Ausrichtung, des durch die Kamera aufgenommenen Bildes der Markierung ein Schätzwert für den Abstand zwischen Kamera und Markierung und ein Schätzwert für den Winkel zwischen der Normalenrichtung der eben ausgeführten Markierung und der Verbindungslinie zwischen Kamera und Markierung bestimmbar. Von Vorteil ist dabei, dass in einfacher Weise aus der Exzentrizität einer Ellipse, also einem verzerrt abgebildeten Kreis, der Winkel der Normalenrichtung des den Kreis enthaltenden Ebene und aus der Größe der Abbildung die Entfernung bestimmbar ist. Anstatt eines Kreises sind auch andere Formen verwendbar, wie beispielsweise ein Rechteck, das bei verzerrter Abbildung als Parallelogramm erscheint, wenn die Blickrichtung senkrecht ist zu einer Seite des Rechtecks und einen Winkel aufweist zur Normalenrichtung der das Parallelogramm enthaltenden Ebene. Bei räumlicher Schrägansicht wird das Rechteck im Wesentlichen rautenförmig verzerrt dargestellt. Auch dann ist der Winkel zwischen Blickrichtung und Normalenrichtung der das Parallelogramm enthaltenden Ebene bestimmbar.

Aus dem aufgenommenen Betrachtungswinkel ist die Orientierung der Kamera im Raum bestimmbar, insbesondere in der Ebene.

Bei einer vorteilhaften Ausgestaltung werden durch Bestimmung der Schätzwerte zu mehreren jeweiligen Markierungen verbesserte Schätzwerte bestimmt. Von Vorteil ist dabei, dass die Fehlerintervalle verminderbar sind bei Erhöhung der Anzahl der verwendeten Markierungen.

Erfindungsgemäß ist eine erste Markierung auf einem ersten Fahrzeug angeordnet,
- wobei die zugehörige Position dieser Markierung, insbesondere zusammen mit ihrem Fehlerintervall, an ein weiteres Fahrzeug übermittelt wird, mit dessen Kamera die Markierung des ersten Fahrzeugs detektiert wird und aus dem übermittelten Positionswert und aus den Schätzwerten, welche aus dem von der Kamera des weiteren Fahrzeugs aufgenommenen Bildes der Markierung bestimmt werden, eine Position des weiteren Fahrzeugs ermittelt wird,

insbesondere wobei die Schätzwerte einen Schätzwert für den Abstand zwischen Kamera und Markierung und einen Schätzwert für den Winkel zwischen Normalenrichtung der eben ausgeführten Markierung und der Verbindungslinie zwischen Kamera und Markierung umfassen. Außerdem ist aus dem Betrachtungswinkel die Orientierung des Fahrzeugs in der Verfahrebene bestimmbar. Von Vorteil ist dabei, dass sogar mobile Markierungen verwendbar sind zur Bestimmung der Position. Somit ist beispielsweise bei hintereinander herfahrenden Fahrzeugen eine schnelle und einfache Bestimmung der Position ermöglicht, indem die Markierung des Vorausfahrenden Fahrzeugs, die beispielsweise an dessen Rückseite angebracht ist, detektiert und ausgewertet wird. Auf diese Weise ist sogar eine Positionsbestimmung in räumlichen Bereichen ermöglicht, wo keine stationären Markierungen in der Umgebung anbringbar oder angebracht sind. Wichtig ist dabei, dass eine Datenaustauschverbindung zwischen den Fahrzeugen und/oder zwischen den Fahrzeugen und einer stationären Rechnereinheit vorhanden ist. Denn die ständig veränderliche räumliche Position der mobilen Markierung muss übermittelt werden und bei der Auswertung der durch die Kamera detektierten Abbildung der Markierung berücksichtigt werden.

Bei einer vorteilhaften Ausgestaltung wird eine zum Zeitpunkt der Bestimmung der Position des ersten Fahrzeuges zugehörige Geschwindigkeit des ersten Fahrzeugs erfasst und
- bei der Bestimmung der Position des weiteren Fahrzeugs wird eine auf den Zeitpunkt der Aufnahme des Bildes der ersten Markierung durch die Kamera des zweiten Fahrzeuges extrapolierte Positionsinformation ermittelt und berücksichtigt bei der Bestimmung der Position des weiteren Fahrzeugs.

Von Vorteil ist dabei, dass bei Detektion und Bestimmung von Positionsdaten relativ zu einer mobilen Markierung eine Erhöhung der Genauigkeit ausführbar ist, indem die zeitlich extrapolierte Position verwendet wird. Hierzu ist selbstverständlich ebenfalls eine Datenaustauschverbindung zwischen dem die Markierung aufweisenden Fahrzeug und dem die Kamera zur Aufnahme eines Bildes der mobilen Markierung aufweisenden Fahrzeugs.

Wichtige Merkmale bei dem Verfahren zum Erstellen einer Soll-Bahnkurve für ein Fahrzeug innerhalb einer Anlage sind, dass
1) das Fahrzeug seine Position mittels einer Kamera und in der Anlage vorgesehenen Markierungen bestimmt und entlang einer Sollkurve gesteuert wird,
2) wobei zu jeder bestimmten Position ein jeweiliges Fehlerintervall, insbesondere Genauigkeitsintervall, bestimmt wird, insbesondere so dass zu jedem Bahnkurvenpunkt ein Genauigkeitsintervall gespeichert wird,
3) wobei Bahnkurvenabschnitte bestimmt werden, in welchen die jeweilige Genauigkeit der bestimmten Positionen einen kritischen Wert übersteigt, insbesondere also in den Bahnkurvenabschnitten die Positionen mit hoher Genauigkeit bestimmbar sind,
4) wobei das Fahrzeug an Bahnpunkte der bestimmten Bahnkurvenabschnitte verfahren wird und dort als Teach-In das Fahrzeug auf eine jeweilige gewünschte Zielposition weiterverfahren wird, insbesondere wobei das Weiterverfahren von einem Bediener ausgeführt wird,
5) wobei eine neue Soll-Bahnkurve mittels eines Rechners derart ermittelt und/oder zusammengesetzt wird, dass die neue Soll-Bahnkurve durch die Zielpositionen verläuft, insbesondere als interpolierte Kurve, insbesondere mittels Spline-Interpolation, oder als aus Kurvensegmenten, wie Geradenabschnitt und/oder Kreisbogenabschnitt, zusammengesetzte Kurve.

Von Vorteil ist dabei, dass zunächst eine Probefahrt gemacht wird und dort die Raumbereiche mit guten Genauigkeiten für die Positionsbestimmung detektierbar sind. Danach wird dann in diesen Raumbereichen das Fahrzeug auf eine gewünschte Position verschoben und somit Offsets oder sonstige systematische Fehler bei der Positionsbestimmung ausgeglichen. Diese neue Position wird als jeweilige Zielposition abgespeichert. Danach werden die Zielpositionen interpoliert und somit eine neue Sollkurve bestimmt, die dann abfahrbar ist.

Wichtige Merkmale der Erfindung bei der Anlage sind, dass sie zumindest ein Fahrzeug aufweist, das zumindest eine Kamera aufweist,
wobei ein Mittel zur Bestimmung der Position zumindest eines Fahrzeugs vorgesehen ist,
wobei in der Anlage Markierungen angeordnet sind.

Von Vorteil ist dabei, dass eine Bestimmung der räumlichen Position mittels der Markierungen ermöglicht ist. Somit ist nur eine einfache kostengünstige Kamera notwendig und das Vorsehen von geeignet ausgeformten Markierungen in der Anlage. Des Weiteren ist eine Kartierung, also eine Bestimmung der Positionen der Markierungen in einer elektronisch verfügbaren Landkarte notwendig, so dass die Position des Fahrzeugs aus den räumlichen Markierungen bestimmbar ist. Dabei muss also im Betrieb nur die Entfernung und Winkellage des Fahrzeugs zur Markierung bestimmt werden.

Vorzugsweise weist die Markierung eine Identitätsinformation, wie Barcode oder dergleichen, auf. Auf diese Weise ist die Markierung eineindeutig identifizierbar und die gespeicherten Positionsdaten sind somit eineindeutig zuordenbar.

Bei einer vorteilhaften Ausgestaltung weist ein Fahrzeug eine oder mehrere Markierungen an seiner Außenseite auf. Von Vorteil ist dabei, dass auch mobile Markierungen mitberücksichtigbar sind.

Bei einer vorteilhaften Ausgestaltung weist die Markierung eine kennzeichnende Form auf, insbesondere ein Rechteck, ein Kreis, ein schraffiertes Rechteck oder ein schraffierter Kreis, so dass aus Größe und Verzerrung des von der Kamera aufgenommenen Bildes der Markierung ein Schätzwert für Abstand zwischen Kamera und Markierung und ein Schätzwert für den Winkel zwischen der Blickrichtung der Kamera und der Verbindungslinie zwischen Kamera und Markierung bestimmbar ist. Unter Blickrichtung wird hier diejenige Linie verstanden, die den Schwerpunkt der Linse der Kamera berührt und senkrecht zur Symmetrieebene der Linse ausgerichtet ist. Von Vorteil ist dabei, dass aus der Größe die Entfernung und aus der Verzerrung, also beispielsweise dem Verhältnis der Hauptachsen einer Ellipse, welche aus der verzerrten Darstellung eines Kreises resultiert, oder aus den Winkeln eines Parallelogramms, welches aus der verzerrten Darstellung eines Rechtecks resultiert, die Winkellage zwischen der Verbindungslinie zwischen Kamera und Markierung und der Normalenrichtung der eben ausgeführten Markierung bestimmbar ist und somit die Position der Kamera bestimmbar ist. Aus dem durch die Kamera bestimmbaren Betrachtungswinkel der Markierung, also demjenigen Winkel, unter dem die Markierung der Kamera erscheint, ist die Ausrichtung der Kamera im Raum bestimmbar.

Aus der Winkellage der Markierung ist der Winkel zwischen Normalenrichtung der Markierung und Verbindunglinie zwischen Kamera und Markierung bestimmbar. Des Weiteren ist aus der Größe der Markierung die Entfernung bestimmbar. Darüber hinaus ist aus dem Betrachtungswinkel der Kamera die Ausrichtung des Fahrzeugs bestimmbar.

Bei einer vorteilhaften Ausgestaltung sind in einem Speicher des Fahrzeugs die räumlichen Positionen der Markierungen speicherbar. Von Vorteil ist dabei, dass nach Detektieren und Identifizieren einer Markierung mittels relativem Abstand und Winkellage zur Markierung die räumliche Position bestimmbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

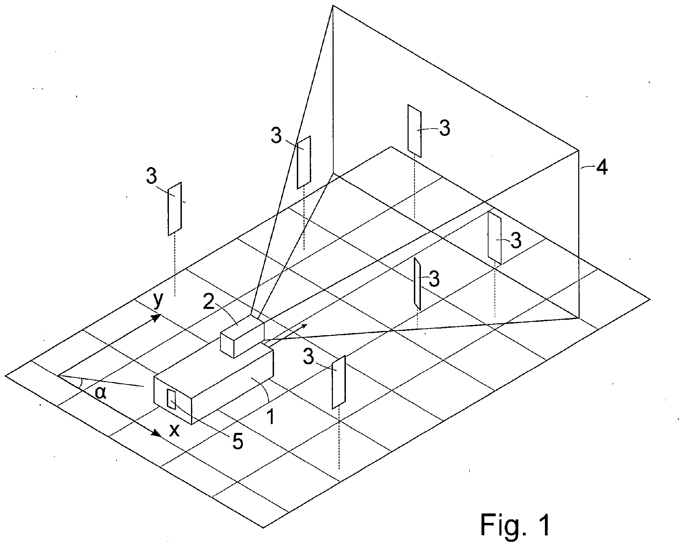

In der Figur 1 ist das Prinzip der Erfindung schematisch skizziert.

Dabei ist ein Fahrzeug 1 mit einer Kamera 2 ausgerüstet. Das Fahrzeug 1 wird in einer Anlage verfahren, die mit mehreren Markierungen 3 ausgestattet ist.

Im Sichtfeld 4 der Kamera 2 liegende Markierungen 3 werden von einem mit der Kamera 2 verbundenen Bilderkennungsmittel detektiert und somit die Position und Ausrichtung des Fahrzeugs in der Anlage bestimmt.

Dabei wird einerseits die jeweilige Position der Markierung 3 in einem Speicher hinterlegt und somit aus den mittels der Kamera bestimmten Winkelabständen zwischen Markierungen 3 die Position des Fahrzeugs bestimmbar.

Vorzugsweise werden die Markierungen 3 in ungefähr konstanter Höhe über an den Rändern eines Fahrzeugs angeordnet, wodurch der Rechenaufwand verringerbar ist.

Mittels der Markierungen 3 samt Kamera 2 mit Bilderkennungssystem ist eine induktiv oder optisch erkennbare Leitlinie entbehrlich.

Bei einem weiteren Ausführungsbeispiel weisen die Markierungen 3 eine derartige Form auf, dass eine Ausrichtung der Markierung 3 mit geringem Rechenaufwand schnell erkennbar ist und daraus die Ausrichtung des Fahrzeugs schnell und mit geringem Aufwand bestimmbar ist.

Das Fahrzeug 1 weist außerdem einen Antrieb, vorzugsweise einen elektromotorischen Antrieb, auf und ist einerseits mit einem Energiespeicher ausgerüstet und andererseits induktiv versorgbar aus einem innerhalb der Anlage langgestreckt verlegten Primärleiter. Zur induktiven Ankoppelung weist das Fahrzeug eine Sekundärspule auf, aus welcher der Antrieb des Fahrzeugs versorgbar ist.

Vorzugsweise ist die Markierung mit derartigen Kreisform, Schraffuren und/oder in rechteckiger Form ausgeführt, dass sogar schon mit einer einzigen Markierung die Entfernung zur Markierung bestimmbar ist. Beispielsweise weist die Markierung in einer rechteckigen Fläche einen Kreis auf sowie parallele Balken, die im Wesentlichen die Restfläche der Markierung auffüllen.

Aus der Verzerrung des Rechtecks zu einem Parallelogramm beziehungsweise aus der Verzerrung der Kreisfläche zu einer Ellipse ist der Betrachtungswinkel der Kamera bestimmbar. Aus der Größe des Rechtecks und/oder des Kreises ist die Entfernung bestimmbar. Zwar sind die bestimmten Werte für Winkel und Entfernung mit einem Fehlerintervall belastet. Jedoch ist durch die Bestimmung dieser Größen zu mehreren Markierungen eine ausreichende Genauigkeit erreichbar.

Die Größe der Markierungen ist ebenso wie deren räumliche Position im Speicher des Fahrzeugs hinterlegt. Somit ist je nach Anzahl der Markierungen eine hohe Genauigkeit erreichbar.

Auf dem Fahrzeug ist ebenfalls eine Markierung 5 anbringbar, die von anderen Fahrzeugen detektierbar ist.

In einem weiteren erfindungsgemäßen Ausführungsbeispiel sind hierzu mehrere Fahrzeuge innerhalb der Anlage vorgesehen, die jeweils zum Datenaustausch entweder direkt miteinander oder mittels einer zentralen Rechnereinheit verbunden sind. Jedes dieser Fahrzeuge ist mit mindestens einer oder mehreren Markierungen 5 an seiner Außenseite ausgestattet.

Hat nun ein Fahrzeug seine Position bestimmt in der oben angegebenen Weise, meldet es dieses Ergebnis zusammen mit dem zugehörigen Fehlerintervall an die zentrale Rechnereinheit und/oder an weitere Fahrzeuge weiter, wobei auch die Geschwindigkeit und Zeit zum Messzeitpunkt weitermeldbar sind.

Auf diese Weise ist es ermöglicht, dass ein weiteres Fahrzeug aus den von seiner Kamera detektierbaren Markierungen und/oder aus der oder den Markierungen 5 des erstgenannten Fahrzeugs seine Position bestimmt, wobei bei Verwendung der Daten der am erstgenannten Fahrzeug angebrachten Markierung auch eine Extrapolation der Position des erstgenannten Fahrzeuges ausgeführt wird, so dass ein Schätzwert dieser Position zum Zeitpunkt der Detektion der Markierungen durch die Kamera des weiteren Fahrzeugs bestimmt wird.

Die Kamera und Markierungen sind auch derart ausführbar, dass sie nur in Infrarot ablesbar sind.

Auf der Rückseite der Markierungen ist eine Klebefläche vorteilhaft zum stoffschlüssigen Verbinden mit entsprechenden Aufnahmeflächen eines Fahrzeugs oder einer Anlagenkomponente.

### Bezugszeichenliste

- 1: Fahrzeug
- 2: Kamera
- 3: Markierung
- 4: Sichtfeld der Kamera 2
- 5: Markierung auf Fahrzeug

## Patentansprüche

1. Verfahren zur Bestimmung der Position eines Fahrzeugs (1) innerhalb einer Anlage,
wobei die Anlage Fahrzeuge (1) aufweist, die jeweils zumindest eine Kamera (2) aufweisen,
wobei in der Anlage stationäre Markierungen an bekannten Positionen angeordnet sind,
wobei eine Kartierung, also eine Bestimmung der Positionen der stationären Markierungen in einer elektronisch verfügbaren Landkarte den Fahrzeugen (1) bereitgestellt wird, so dass die Position des Fahrzeugs (1) aus den räumlichen Markierungen bestimmbar ist,
wobei jedes der Fahrzeuge (1) zusätzlich eine oder mehrere mobile Markierungen (5) an seiner Außenseite aufweist,
wobei jede Markierung (3, 5) jeweils eine bekannte kennzeichnende Form und Größe aufweist,
wobei eine oder mehrere, auf einem weiteren Fahrzeug (1) und/oder in der Anlage angeordnete Markierung (3) beziehungsweise Markierungen mittels einer Kamera (2) des Fahrzeugs (1) detektiert werden, also ein Bild erfasst und/oder aufgenommen werden,
wobei aus Größe und Verzerrung des von der jeweiligen Kamera (2) aufgenommenen Bildes der Markierung (3, 5)
ein Schätzwert für Abstand zwischen Kamera (2) und Markierung (3, 5) und
ein Schätzwert für den Winkel zwischen Normalenrichtung derjenigen Ebene, in welcher die Markierung (3, 5) angeordnet ist, also der Blickrichtung der Kamera (2), und der Verbindungslinie zwischen Kamera (2) und Markierung (3) bestimmt wird,
und aus den Schätzwerten für Abstand und Winkel sowie den bekannten Positionen der stationären Markierungen aus einem jeweils detektierten Bild zumindest einer Markierung (3, 5) die Position eines Fahrzeugs (1) zur Markierung (3, 5) geschätzt und/oder bestimmt wird,
wobei eine erste mobile Markierung (3) auf dem ersten Fahrzeug (1) angeordnet ist, und nachdem das Fahrzeug (1) seine Position, und damit die Position seiner ersten mobilen Markierung (5), bestimmt, das Fahrzeug (1) die Position dieser Markierung (5) zusammen mit ihrem Fehlerintervall an ein weiteres Fahrzeug (1) übermittelt,
wobei mit dessen Kamera (2) die mobile Markierung (5) auf der Außenseite des ersten Fahrzeugs (1) detektiert wird und aus dem übermittelten Positionswert und aus den Schätzwerten, welche aus dem von der Kamera (2) des weiteren Fahrzeugs (1) aufgenommenen Bildes der Markierung (5) bestimmt werden, eine Position des weiteren Fahrzeugs (1) ermittelt wird.

2. Verfahren nach Anspruch 1,
**dadurch gekennzeichnet, dass**
aus Größe und Verzerrung und auch aus Form, Position und räumlicher Ausrichtung des durch die Kamera (2) aufgenommenen Bildes der Markierung (3) ein Schätzwert für den Abstand zwischen Kamera (2) und Markierung (3) und ein Schätzwert für den Winkel zwischen der Blickrichtung der Kamera (2) und der Verbindungslinie zwischen Kamera (2) und Markierung (3) bestimmbar ist.

3. Verfahren nach Anspruch 1 oder 2,
**dadurch gekennzeichnet, dass**
durch Bestimmung der Schätzwerte zu mehreren jeweiligen Markierungen (3) verbesserte Schätzwerte bestimmt werden.

4. Verfahren nach einem der vorangegangenen Ansprüche,
**dadurch gekennzeichnet, dass**
- eine zum Zeitpunkt der Bestimmung der Position des ersten Fahrzeuges (1) zugehörige Geschwindigkeit des ersten Fahrzeugs (1) erfasst wird und
- bei der Bestimmung der Position des weiteren Fahrzeugs (1) eine auf den Zeitpunkt der Aufnahme des Bildes der ersten Markierung (3) durch die Kamera (2) des zweiten Fahrzeuges (1) extrapolierte Positionsinformation ermittelt und berücksichtigt wird bei der Bestimmung der Position des weiteren Fahrzeugs (1).

5. Verfahren nach einem der vorangegangenen Ansprüche,
**dadurch gekennzeichnet, dass**
aus den bekannten Positionen und Orientierungen der Markierungen (3) eine elektronische lesbare Landkarte erstellt wird, aus der Raumbereiche bestimmbar sind, in denen eine fehlerarme Positionsbestimmung ausführbar ist,
insbesondere wobei also eine hohe Anzahl von Markierungen (3) detektierbar ist und mittels der Kamera (2) bestimmbar ist,
wobei eine Soll-Bahnkurve für das Fahrzeug (1) derart bestimmt wird, dass eine möglichst viele und/oder lange Bahnkurvenabschnitte durch die Raumbereiche mit fehlerarmer Positionsbestimmung verlaufen.

6. Verfahren nach Anspruch 5,
**dadurch gekennzeichnet, dass**
aus der elektronisch lesbaren Landkarte Position und Ausrichtung einer zusätzlich erforderlichen Markierung (3) bestimmt wird.

7. Verfahren nach einem der vorangegangenen Ansprüche,
**dadurch gekennzeichnet, dass**
wobei
1) wobei das Fahrzeug (1) seine Position mittels einer Kamera und in der Anlage vorgesehenen Markierungen (3) bestimmt und entlang einer Sollkurve gesteuert wird,
2) wobei zu jeder bestimmten Position ein jeweiliges Fehlerintervall, also Genauigkeitsintervall, bestimmt wird,
wobei Bahnkurvenabschnitte bestimmt werden, in welchen die jeweilige Genauigkeit der bestimmten Positionen einen kritischen Wert übersteigt, wobei das Fahrzeug (1) an Bahnpunkte der bestimmten Bahnkurvenabschnitte verfahren wird und dort als Teach-In das Fahrzeug (1) auf eine jeweilige gewünschte Zielposition weiterverfahren wird,
3) wobei eine neue Soll-Bahnkurve mittels eines Rechners derart ermittelt und/oder zusammengesetzt wird, dass die neue Soll-Bahnkurve durch die Zielpositionen verläuft als interpolierte Kurve, insbesondere mittels Spline-Interpolation, oder als aus Kurvensegmenten, wie Geradenabschnitt und/oder Kreisbogenabschnitt, zusammengesetzte Kurve.

8. Anlage mit Mitteln zur Durchführung eines Verfahrens nach einem der vorangegangenen Ansprüche, aufweisend Fahrzeuge (1), die jeweils zumindest eine Kamera (2) aufweisen,
wobei am jeweiligen Fahrzeug (1) ein Mittel zur Bestimmung der Position zumindest eines jeweiligen Fahrzeugs (1) vorgesehen ist,
wobei in der Anlage stationäre Markierungen (3) an bekannten Positionen angeordnet sind,
wobei jedes der Fahrzeuge (1) zusätzlich eine oder mehrere mobile Markierungen (3) an seiner Außenseite aufweist,
wobei jede Markierung (3) jeweils eine bekannte kennzeichnende Form und Größe aufweist, so dass aus Größe und Verzerrung des von der jeweiligen Kamera (2) aufgenommenen Bildes der Markierung (3) ein Schätzwert für Abstand zwischen Kamera (2) und Markierung (3) und ein Schätzwert für den Winkel zwischen Normalenrichtung der eben ausgeführten Markierung (3) und der Verbindungslinie zwischen Kamera (2) und Markierung (3) bestimmt wird,
wobei eine Kartierung, also eine Bestimmung der Positionen der Markierungen (3) in einer elektronisch verfügbaren Landkarte ausgeführt wird, so dass die Position des Fahrzeugs (1) aus den räumlichen Markierungen (3) bestimmbar ist.

9. Anlage nach Anspruch 8,
**dadurch gekennzeichnet, dass**
in einem Speicher des Fahrzeugs (1) die räumlichen Positionen der Markierungen (3) speicherbar sind.

10. Anlage nach einem der Ansprüche 8 bis 9,
**dadurch gekennzeichnet, dass**
die Markierungen (3) eine jeweilige eineindeutig kennzeichnende Struktur, wie Identitätsinformation, Barcode oder dergleichen, aufweisen.

11. Anlage nach einem der Ansprüche 8 bis 10,
**dadurch gekennzeichnet, dass**
die Kamera (2) im Bereich nicht-sichtbarer elektromagnetischer Wellen arbeitet und die Markierungen (3) in diesem Bereich kennzeichnend sind.

12. Anlage nach einem der Ansprüche 8 bis 11,
**dadurch gekennzeichnet, dass**
die Markierungen (3) auf ihrer Rückseite selbstklebend ausgeführt sind.

13. Anlage nach einem der Ansprüche 8 bis 12,
**dadurch gekennzeichnet, dass**
die Markierungen (3) auf ihrer Rückseite selbstklebend ausgeführt sind zum schnellen und einfachen Anordnen an Komponenten der Anlage oder an einer entsprechenden Aufnahmefläche am Fahrzeug (1).

## Claims

1. A method for determining the position of a vehicle (1) within an installation,
wherein the installation has vehicles (1) which in each case have at least one camera (2),
wherein stationary markings are arranged at known positions in the installation,
wherein mapping, i.e. determination of the positions of the stationary markings on an electronically available map is made available to the vehicles (1), so that the position of the vehicle (1) can be determined from the spatial markings,
wherein each of the vehicles (1) additionally has one or more mobile markings (5) on its outside,
wherein each marking (3, 5) in each case has a known characterising shape and size,
wherein one or more marking (3) or markings arranged on a further vehicle (1) and/or in the installation are detected by means of a camera (2) of the vehicle (1), i.e. an image are [sic] acquired and/or recorded,
wherein from the size and distortion of the image of the marking (3, 5) taken by the respective camera (2)
an estimated value for the distance between camera (2) and marking (3, 5) and
an estimated value for the angle between the normal direction of that plane in which the marking (3, 5) is arranged, i.e. the viewing direction of the camera (2), and the connecting line between the camera (2) and marking (3), is determined,
and from the estimated values for distance and angle and also from the known positions of the stationary markings from an image, detected in each case, of at least one marking (3, 5) the position of a vehicle (1) relative to the marking (3, 5) is estimated and/or determined,
wherein a first mobile marking (3) is arranged on the first vehicle (1), and once the vehicle (1) determines its position, and hence the position of its first mobile marking (5), the vehicle (1) transmits the position of this marking (5) together with its error interval to a further vehicle (1),
wherein with the camera (2) thereof the mobile marking (5) on the outside of the first vehicle (1) is detected and from the transmitted position value and from the estimated values which are determined from the image of the marking (5) taken by the camera (2) of the further vehicle (1), a position of the further vehicle (1) is ascertained.

2. A method according to Claim 1,
**characterised in that**
from the size and distortion, and also from the shape, position and spatial orientation, of the image of the marking (3) taken by the camera (2) an estimated value for the distance between camera (2) and marking (3) and an estimated value for the angle between the viewing direction of the camera (2) and the connecting line between the camera (2) and marking (3) can be determined.

3. A method according to Claim 1 or 2,
**characterised in that**
improved estimated values are determined by determining the estimated values for a plurality of respective markings (3).

4. A method according to one of the preceding claims,
**characterised in that**
- a speed of the first vehicle (1) which belongs to the time of the determining of the position of the first vehicle (1) is acquired, and
- upon the determining of the position of the further vehicle (1) position information extrapolated to the time at which the image of the first marking (3) was taken by the camera (2) of the second vehicle (1) is ascertained and is taken into account in determining the position of the further vehicle (1).

5. A method according to one of the preceding claims,
**characterised in that**
an electronic readable map is created from the known positions and orientations of the markings (3), from which map spatial regions in which a low-error determination of position can be carried out can be determined,
in particular wherein therefore a high number of markings (3) can be detected and can be determined by means of the camera (2),
wherein a desired trajectory for the vehicle (1) is determined such that [a] as many as possible and/or as long as possible trajectory portions run through the spatial regions with low-error determination of position.

6. A method according to Claim 5,
**characterised in that**
the position and orientation of a marking (3) which is additionally necessary is determined from the electronically readable map.

7. A method according to one of the preceding claims,
**characterised in that**
wherein
1) wherein the vehicle (1) determines its position by means of a camera, and markings (3) provided in the installation, and is steered along a desired curve,
2) wherein a respective error interval, i.e. accuracy interval, is determined for each position determined,
wherein trajectory portions are determined in which the respective accuracy of the positions determined exceeds a critical value,
wherein the vehicle (1) is moved to trajectory points of the trajectory portions determined and there as a teach-in the vehicle (1) is moved further to a respective desired target position,
3) wherein a new desired trajectory is ascertained and/or put together by means of a computer such that the new desired trajectory runs through the target positions as an interpolated curve, in particular by means of spline interpolation, or as a curve composed of curve segments, such as straight-line portion and/or circular-arc portion.

8. An installation with means for carrying out a method according to one of the preceding claims, having vehicles (1) which in each case have at least one camera (2),
wherein a means for determining the position of at least one respective vehicle (1) is provided on the respective vehicle (1),
wherein stationary markings (3) are arranged at known positions in the installation,
wherein each of the vehicles (1) additionally has one or more mobile markings (3) on its outside,
wherein each marking (3) in each case has a known characterising shape and size, so that from the size and distortion of the image of the marking (3) taken by the respective camera (2) an estimated value for the distance between camera (2) and marking (3) and an estimated value for the angle between the normal direction of the marking (3), which is made flat, and the connecting line between the camera (2) and marking (3) is determined,
wherein mapping, i.e. determination of the positions of the markings (3) on an electronically available map is carried out, so that the position of the vehicle (1) can be determined from the spatial markings (3).

9. An installation according to Claim 8,
**characterised in that**
the spatial positions of the markings (3) can be stored in a memory of the vehicle (1).

10. An installation according to one of Claims 8 to 9,
**characterised in that**
the markings (3) have a respective one-to-one characterising structure, such as identity information, barcode or the like.

11. An installation according to one of Claims 8 to 10,
**characterised in that**
the camera (2) operates in the range of non-visible electromagnetic waves and the markings (3) are **characterising in** this range.

12. An installation according to one of Claims 8 to 11,
**characterised in that**
the markings (3) are self-adhesive on their rear side.

13. An installation according to one of Claims 8 to 12,
**characterised in that**
the markings (3) are self-adhesive on their rear side for rapid and simple arrangement on components of the installation or on a corresponding receiving surface on the vehicle (1).

## Revendications

1. Procédé pour déterminer la position d'un véhicule (1) à l'intérieur d'une installation,
l'installation possédant des véhicules (1) qui possèdent respectivement au moins une caméra (2),
des marquages fixes étant disposés à des positions connues dans l'installation, une cartographie, c'est-à-dire une détermination des positions des marquages fixes, étant mise à disposition des véhicules (1) dans une carte géographique disponible électroniquement, de sorte que la position du véhicule (1) peut être déterminée à partir des marquages fixes,
chacun des véhicules (1) possédant en plus un ou plusieurs marquages mobiles (5) sur son côté extérieur, chaque marquage (3, 5) possédant respectivement une forme et une taille caractéristiques connues,
un ou plusieurs marquage (3) ou marquages disposés sur un véhicule (1) supplémentaire et/ou dans l'installation étant détectés au moyen d'une caméra (2) du véhicule (1), c'est-à-dire qu'une image est capturée et/ou enregistrée,
une valeur estimée pour la distance entre la caméra (2) et le marquage (3, 5) et
une valeur estimée pour l'angle entre la direction de la normale du plan dans lequel est disposé le marquage (3, 5), c'est-à-dire la direction de visée de la caméra (2), et la ligne de liaison entre la caméra (2) et le marquage (3) étant déterminées
à partir de la taille et de la déformation de l'image du marquage (3, 5) enregistrée par la caméra (2) respective, et la position d'un véhicule (1) par rapport au marquage (3, 5) étant estimée et/ou déterminée à partir des valeurs estimées pour la distance et pour l'angle ainsi que des positions des marquages fixes connues à partir d'une image respectivement détectée d'au moins un marquage (3, 5),
un premier marquage mobile (3) étant disposé sur le premier véhicule (1), et après que le véhicule (1) détermine sa position et ainsi la position de son premier marquage mobile (5), le véhicule (1) communique la position de ce marquage (5) conjointement avec son intervalle d'erreur à un véhicule (1) supplémentaire,
le marquage mobile (5) sur le côté extérieur du premier véhicule (1) étant détecté avec sa caméra (2) et une position du véhicule (1) supplémentaire étant identifiée à partir de la valeur de position communiquée et à partir des valeurs estimées qui sont déterminées à partir de l'image du marquage (5) enregistrée par la caméra (2) du véhicule (1) supplémentaire.

2. Procédé selon la revendication 1, **caractérisé en ce qu'**une valeur estimée pour la distance entre la caméra (2) et le marquage (3) et une valeur estimée pour l'angle entre la direction de visée de la caméra (2) et la ligne de liaison entre la caméra (2) et le marquage (3) peuvent être déterminées à partir de la taille et de la déformation et aussi à partir de la forme, de la position et de l'orientation spatiale de l'image du marquage (3) enregistrée par la caméra (2).

3. Procédé selon la revendication 1 ou 2, **caractérisé en ce que** des valeurs estimées améliorées sont déterminées en déterminant les valeurs estimées pour plusieurs marquages (3) respectifs.

4. Procédé selon l'une des revendications précédentes, **caractérisé en ce que**
- une vitesse du premier véhicule (1) associée à l'instant de la détermination de la position du premier véhicule (1) est détectée et
- lors de la détermination de la position du véhicule (1) supplémentaire, une information de position extrapolée à l'instant de l'enregistrement de l'image du premier marquage (3) par la caméra (2) du deuxième véhicule (1) est identifiée et prise en compte lors de la détermination de la position du véhicule (1) supplémentaire.

5. Procédé selon l'une des revendications précédentes,
**caractérisé en ce que**
une carte géographique lisible électroniquement est créée à partir des positions et des orientations connues des marquages (3), à partir de laquelle il est possible de déterminer des zones dans l'espace dans lesquelles une détermination de position peut être réalisée avec un faible taux d'erreurs,
cela voulant notamment dire qu'un grand nombre de marquages (3) peuvent être détectés et peuvent être déterminés au moyen de la caméra (2),
une courbe de trajectoire de consigne pour le véhicule (1) étant déterminée de telle sorte que des portions de courbe de trajectoire aussi nombreuses et/ou longues que possible passent à travers les zones dans l'espace ayant la détermination de position avec un faible taux d'erreurs.

6. Procédé selon la revendication 5, **caractérisé en ce que** la position et l'orientation d'un marquage (3) nécessaire supplémentaire sont déterminées à partir de la carte géographique lisible électroniquement.

7. Procédé selon l'une des revendications précédentes, **caractérisé en ce que** dans lequel
1) le véhicule (1) déterminant sa position au moyen d'une caméra et des marquages (3) présents dans l'installation et étant commandé le long d'une courbe de consigne,
2) un intervalle d'erreur respectif, c'est-à-dire un intervalle de précision, étant déterminé pour chaque position déterminée,
des portions de courbe de trajectoire étant déterminées, dans lesquelles la précision respective de la position déterminée dépasse une valeur critique,
le véhicule (1) étant conduit à des points de trajectoire des portions de courbe de trajectoire déterminées et la conduite du véhicule (1) jusqu'à une position cible voulue respective s'y poursuivant sous la forme d'un apprentissage,
3) une nouvelle courbe de trajectoire de consigne étant identifiée et/ou assemblée au moyen d'un ordinateur, la nouvelle courbe de trajectoire de consigne passant par les positions cibles sous la forme d'une courbe interpolée, notamment au moyen d'une interpolation de spline, ou sous la forme d'une courbe assemblée à partir de segments de courbe, comme une portion de droite et/ou une portion d'arc de cercle.

8. Installation comprenant des moyens pour mettre en œuvre un procédé selon l'une des revendications précédentes, possédant des véhicules (1) qui possèdent respectivement au moins une caméra (2),
un moyen destiné à déterminer la position d'au moins un véhicule (1) respectif étant présent au niveau d'un véhicule (1) respectif,
des marquages fixes (3) étant disposés à des positions connues dans l'installation,
chacun des véhicules (1) possédant en plus un ou plusieurs marquages mobiles (3) sur son côté extérieur, chaque marquage (3) possédant respectivement une forme et une taille caractéristiques connues, de sorte qu'une valeur estimée pour la distance entre la caméra (2) et le marquage (3) et une valeur estimée pour l'angle entre la direction de la normale du plan dans lequel est disposé le marquage (3) et la ligne de liaison entre la caméra (2) et le marquage (3) sont déterminées à partir de la taille et de la déformation de l'image du marquage (3) enregistrée par la caméra (2) respective,
une cartographie, c'est-à-dire une détermination des positions des marquages (3) étant réalisée dans une carte géographique disponible électroniquement, de sorte que la position du véhicule (1) peut être déterminée à partir des marquages (3) dans l'espace.

9. Installation selon la revendication 8, **caractérisée en ce que** les positions dans l'espace des marquages (3) peuvent être mémorisées dans une mémoire du véhicule (1).

10. Installation selon l'une des revendications 8 à 9, **caractérisée en ce que** les marquages (3) présentent une structure caractéristique respectivement univoque, telle qu'une information d'identité, un code à barres ou similaire.

11. Installation selon l'une des revendications 8 à 10, **caractérisée en ce que** la caméra (2) fonctionne dans la plage des ondes électromagnétiques non visibles et les marquages (3) sont caractérisés dans cette plage.

12. Installation selon l'une des revendications 8 à 11, **caractérisée en ce que** les marquages (3) sont réalisés autocollants sur leur verso.

13. Installation selon l'une des revendications 8 à 12, **caractérisée en ce que** les marquages (3) sont réalisés autocollants sur leur verso en vue d'une disposition rapide et simple sur des composants de l'installation ou sur une surface d'accueil correspondante au niveau du véhicule (1).
